# EUROPEAN PATENT APPLICATION

(11) **EP 4 498 638 A1**
(43) Date of publication of application: **29.01.2025**
(21) Application number: 24159979.4
(22) Date of filing: 27.02.2024
(51) Int. Cl.: H04L 9/40

(54) **INFORMATION PROCESSING EQUIPMENT, INFORMATION PROCESSING METHOD, AND INFORMATION PROCESSING PROGRAM**

(30) Priority: 27.07.2023 JP 2023122336
(71) Applicant: Kabushiki Kaisha Toshiba, Tokyo 105-0023 (JP)
(72) Inventor: KANAI, Jun, Minato-ku, Tokyo (JP); SANO, Fumihiko, Minato-ku, Tokyo (JP); SHINKE, Yurie, Minato-ku, Tokyo (JP)
(74) Representative: Hoffmann Eitle

(57) **Abstract**

According to one arrangement, an information processing equipment provided with an edge, comprises a subprogram storage memory (17), an anomaly detector (11), a network connection/disconnection part (14), a response part (15), and a subprogram execution part (16), characterized in that, the subprogram storage memory (17) stores a subprogram to execute one or more certain functions, an anomaly detector (11) detects anomaly according to a certain rule and switches modes indicative of anomaly/normality states of the edge to anomaly state upon detection of anomaly, a network connection/disconnection part (14) performs a certain process when the anomaly detector detects anomaly, a response part (15) instructs execution of one or more procedures of the subprogram based on the state of the mode and a subprogram execution part (16) executes one or more procedures of the subprogram.

## Description

### FIELD

The present disclosure relates to an information processing equipment, information processing method, and information processing program, related to cyber resilience.

### BACKGROUND

In recent years, the information processing system is becoming more important socially, resilience techniques to rapidly recover the system operation in a case of disaster and the like are desired. As the infrastructure system is becoming cyber physical system (CPS), it is more difficult to defend against all cyber attacks and to continuously operate the entire system, and thus, in the IT region, the idea of cyber resilience is becoming more popular in order to minimize the influence of the attacks and to realize earlier recovery.

However, in order to minimize the influence of the attacks, the resilience function focusing on edges which are the core of infrastructure service is required.

The present application presents an information processing equipment, information processing method, and information processing program, with such a resilient function.

### BRIEF DESCRIPTION OF THE DRAWINGS

FIG. 1 is a structural diagram illustrating an entire system of a first arrangement.
FIG. 2 illustrates an example of an anomaly detection database of the information processing equipment of the first arrangement.
FIG. 3 is a functional structure example of a constantly executed program of the information processing equipment of the first arrangement.
FIG. 4 is a functional structure example of a normality time executed program of the information processing equipment of the first arrangement.
FIG. 5 is a functional structure example of an anomaly time executed program of the information processing equipment of the first arrangement.
FIG. 6 is a functional structure example of a recovery time executed program of the information processing equipment of the first arrangement.
FIG. 7 is a flowchart of a process operation of the information processing equipment of the first arrangement.
FIG. 8 is a flowchart of a process operation of acquiring sensor data by the information processing equipment of the first arrangement.
FIG. 9 is a flowchart of a process operation of operating an actuator by the information processor of the first arrangement.
FIG. 10 is a flowchart of a process operation of recovering a network operation by the information processing equipment of the first arrangement.
FIG. 11 is a structural diagram of an entire system of a second arrangement.
FIG. 12 is a structural diagram illustrating an edge of a variation 1.
FIG. 13 is a structural diagram illustrating an edge of a variation 2.

### DETAILED DESCRIPTION

According to one arrangement, an information processing equipment provided with an edge, comprises a processor which detects anomaly according to a certain rule and switch modes indicative of anomaly/normality states of the edge to anomaly state upon detection of anomaly and perform a certain process when the anomaly detector detects anomaly and instruct execution of one or more procedures of the subprogram based on the state of the mode and execute one or more procedures of the subprogram.

### (First arrangement)

In the present arrangement, an example of an information processing equipment which can provide a resilient response to anomaly caused by natural disaster or cyber attack to a cloud server connected thereto via a network will be described. The information processing equipment is placed in an edge (of, for example, a power plant or a railroad controlling facility), and includes a function to control machines in the edge by exchanging data with the cloud server.

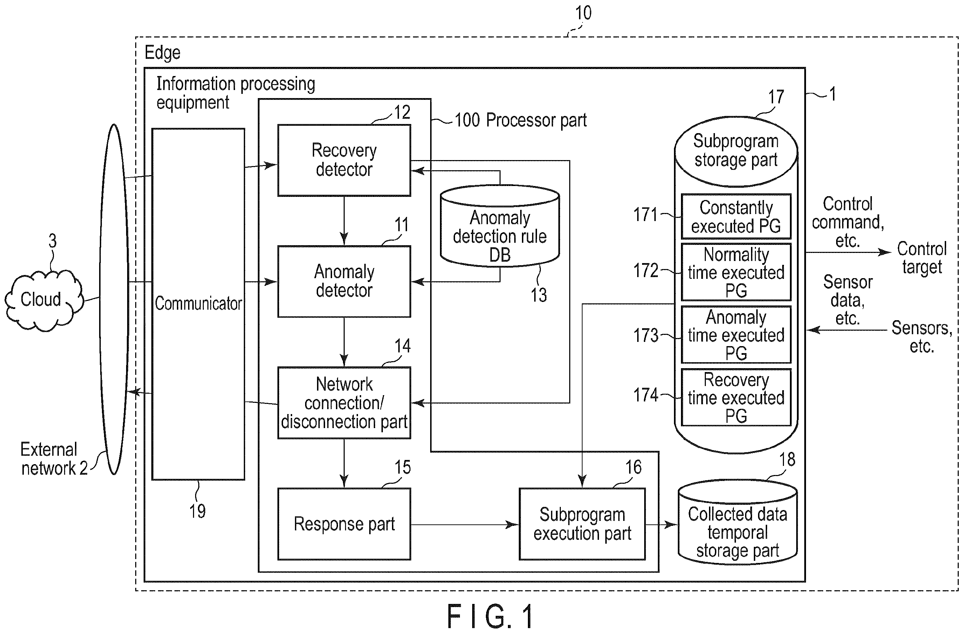

FIG. 1 is a structural diagram of an entire system of the first arrangement.

An information processing equipment 1 of the first arrangement includes an anomaly detector 11, recovery detector 12, anomaly detection rule DB 13, network connection/disconnection part 14, response part 15, subprogram execution part 16, subprogram storage part 17, collected data temporal storage part 18, and communicator 19. These functions may be realized by, for example, software, hardware, or a combination thereof. Furthermore, the subprogram storage part 17 is for example, a nonvolatile memory, and stores one or more of constantly executed PG 171, normality time executed PG 172, anomaly time executed PG 173, and recovery time executed PG 174.

The information processing equipment 1 is a computer with computing and controlling functions, for example, and with a CPU executing a software program, and volatile or non-volatile memory storing data, for example. For example, the information processing equipment 1 may be an optional computer device such as a personal computer, or a smartphone. The information processing equipment 1 may transmit controlling commands (for example, turbine number control, and medicine injection amount) to a controlling target in an edge 10, and may receive sensor data (for example, temperature, medicine injection amount, and rotation number data) output from a measuring device such as a sensor in the edge 10.

Specifically, the information processing equipment 1 is placed in an edge 10 of, for example, a wind turbine power plant, or a dam. In the wind turbine power plant, a control target will be, for example, wind turbines, control command will be, for example, controlling of the number of turbines, and sensor data will be, for example, rotation number data. Naturally, there may be two or more control targets, control commands, and sensor data.

An external network 2 is a network to which one or more information processing equipment 1 and one or more clouds 3 are connected, and is, for example, the internet. Note that, the external network 2 may be communication network of any communication method such as WiFi (registered trademark), and 5th generation communication (5G) instead of wired communication.

The cloud 3 is a computer system configured with a cloud technique, and exchanges various data with the information processing equipment 1 via the external network 2. The cloud 3 of the present arrangement transmits control data to the information processing equipment 1 to control a control target connected to the information processing equipment 1 such as a machine, and receives sensor data and the like transmitted by the information processing equipment 1. Note that, there may be two or more clouds 3 connected to the external network 2, and the information processing equipment 1 may perform data communication with such multiple clouds 3.

The edge 10 is a target system to be controlled by the cloud, and in the present arrangement, includes the information processing equipment 1, and control target and sensor connected to the information processing equipment 1. For example, if the present arrangement is applied to a power plant, the edge 10 is a system including the information processing equipment 1 and the power generating facility controlled by the information processing equipment 1. The edge 10 of the present arrangement is applicable to any facility, and if it is applied to, for example, a power plant, or a dam, the edge 10 tends to be placed in a remote area where a person cannot easily attend, and since there is difficulty to place a person to the control target, the control by cloud as in the present arrangement is desired.

The anomaly detector 11 includes a function to detect anomaly according to a rule included in the anomaly detection rule DB 13 from communication situation of the external network 2. Upon detection of anomaly, the network connection/disconnection part 14 is called, and disconnecting the communication with the external network 2 is instructed. The anomaly detector 11 can monitor the communication situation of the external network 2 at any time. Note that, when the communication with the external network 2 is disconnected by the network connection/disconnection part 14, communication between the anomaly detector 11 and the recovery detector 12 and the external network 2 may be continued.

The recovery detector 12 includes a function to detect recovery from an anomaly state to a normality state according to a rule included in the anomaly detection rule DB 13 from the communication situation of the external network 2. If the recovery is detected, the recovery detector 12 calls the network connection/disconnection part 14 and instructs reopening of the communication with the external network 2. The recovery detector 12 can monitor the communication situation with the external network 2 at any time.

Upon detection of anomaly in an environment which operates the edge such as cloud 3, the anomaly detector 11 sets a state (or mode) of the operation environment of the edge to an anomaly state, and sets the mode of the edge to a normality state if the recovery detector 12 acknowledges the state is no longer an anomaly state.

Note that, if the information processing equipment 1 and the external network 2 are completely disconnected while the state of devices in the external network 2 must be monitored based on the anomaly detection rule, there may be utilized, for example, a function to acquire such a state via a different network instead of the external network 2. For example, if the network to be disconnected is a wired internet line, monitoring by the anomaly detector 11 and the recovery detector 12 may be performed through a mobile phone network, or other analogue phone lines.

The anomaly detection rule DB 13 is, for example, a nonvolatile memory, and stores anomaly detection rule database and the like to be referred to by, for example, the anomaly detector 11 and the recovery detector 12.

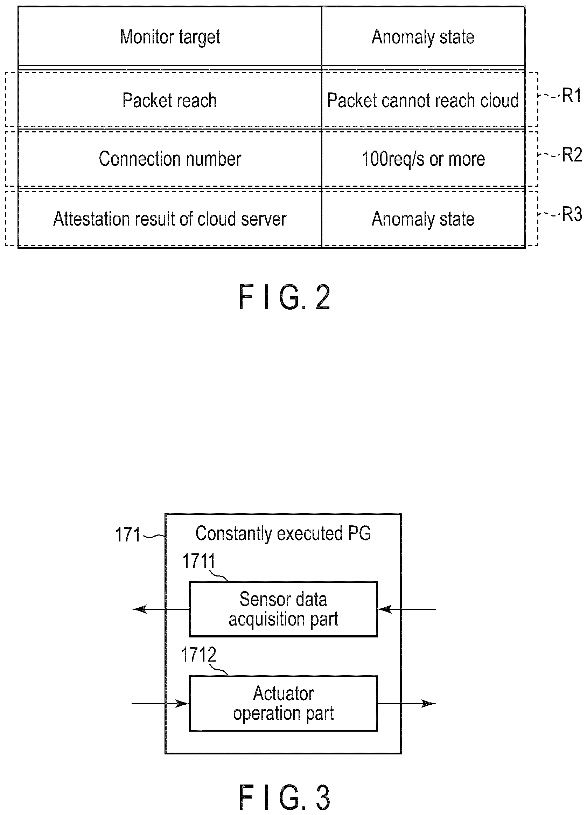

FIG. 2 illustrates an example of the anomaly detection database of the information processing equipment of the first arrangement, and includes, for example, monitor targets to be monitored for anomaly detection, and rules to determine states regarded as anomaly states.

Data R1 is an example of a rule by which packet arrivals are monitored and an anomaly state is flagged if a packet cannot reach the cloud 3. Data R2 is an example of a rule by which an anomaly state is flagged if the number of connections with respect to the information processing equipment 1 is limited and the number of connections exceeds, for example, 100 requests/s, in other words, by which it is deemed to be under a DoS attack. Data R3 is an example of a rule by which the cloud 3 system is monitored using a remote attestation technique, and an anomaly state is flagged if the attestation result becomes an anomaly state which does not match an estimated state.

Note that, apart from the above example, suitable rules may be set based on response purposes of the present arrangement. The anomaly detector 11 may monitor the monitor targets of the anomaly detection database, and deem an anomaly state if the state fits the rule, and the recovery detector 12 may monitor the monitor targets of the anomaly detection database in an anomaly state, and deem recovery to a normality state if the state no longer fits the rule. If there may be multiple rules in the anomaly detection database, an anomaly state may be deemed if any one rule is satisfied, or an anomaly state may be deemed if a certain number of rules or all rules are satisfied.

Referring to FIG. 1, the network connection/disconnection part 14 includes a function to disconnect and reconnect the communication with the external network 2 according to an instruction from the recovery detector 12 and the anomaly detector 11. Specifically, upon detection of anomaly while the mode of the edge is in a normality state, the network connection/disconnection part 14 may perform a disconnecting process of the external network 2, and upon detection of recovery, perform a connecting process with the external network 2. Furthermore, upon detection of anomaly while the mode of the edge is in a normality state, the network connection/disconnection part 14 may activate an operation to pass a predetermined packet alone, and upon detection of recovery, deactivate the operation to pass a predetermined packet alone.

The network connection/disconnection part 14 may disconnect all communication when disconnecting the communication, or may have a function to the communication from the external network 2 to an internal network of the edge 10 while passing the communication from the internal network to the external network 2. Furthermore, the communication between the recovery detector 12 and the anomaly detector 11 and the external network 2 may not be disconnected when the recovery detector 12 and the anomaly detector 11 are activated.

Furthermore, in general, communication cannot be established in a one-way communication in TCP/IP communication, and thus, if the communication from the external network 2 to the internal network communication is disconnect, the network connection/disconnection part 14 may include a function to return a response with respect to communication devices in the internal network. Furthermore, the network connection/disconnection part 14 may include a function to pass or disconnect packets received through a specific protocol alone, that is, a general firewall function or a one-way gateway function. Furthermore, the network connection/disconnection part 14 calls the response part 15 in response to a state change such as connection, disconnection, and the like of the network. With the aforementioned functions of the network connection/disconnection part 14, influences to the edge 10 cite in an emergency occasion can be reduced.

The response part 15 includes a function to change a program to be executed in the subprogram execution part 16 in response to a state change in the mode. When the information processing equipment 1 is turned on, the response part 15 initially instructs execution of the constantly executed PG 171 and the normality time executed PG 172 stored in the subprogram storage part 17 to the subprogram execution part 16. Furthermore, when the mode changes to the anomaly state, the response part 15 instructs a termination of the normality time executed PG 172 to the subprogram execution part 16 while instructing a start of execution of the anomaly time executed PG 173 to the subprogram execution part 16. On the other hand, when the state is recovered from the anomaly state, the response part 15 instructs a termination of the anomaly time executed PG 173 to the subprogram execution part 16 in order to execute the recovery time executed PG 174 while instructing re-execution of the normality time executed PG 172. The response part 15 may include a function to switch the programs to be executed based on the modes, that is, a function to switch between the normality time executed PG 172 and the anomaly time executed PG 173, for example.

The subprogram execution part 16 includes a function to call and execute a program instructed by the response part 15 from the subprogram storage part 17 while terminating a program if a termination of the program is instructed by the response part 15.

Furthermore, if communication with the external network 2 cannot be performed because of a disconnection or the like, the subprogram execution part 16 temporarily store data collected by the constantly executed PG 171 and the anomaly time executed PG 173 to be sent to the external network 2 in the collected data temporal storage part 18 and send the data to the external network 2 when the state is recovered. The collected data temporal and storage part 18 is, for example, nonvolatile or volatile memory. For example, if the information processing equipment 1 is configured to collect data such as sensor data and to transmit the collected data to a server in the external network 2, the sensor data will be temporarily stored in the collected data temporal storage part 18 when the external network 2 is disconnect, and the sensor data will be transmitted to the server in the external network 2 when it is reconnected to the external network 2.

The subprogram execution part 16 constantly executes the constantly executed PG 171, and executes one or more of the normality time executed PG 172, anomaly time executed PG 173, and recovery time executed PG 174 based on the mode state of the edge.

The collected data temporal storage part 18 temporarily stores data designated by the subprogram execution part 16.

The subprogram storage part 17 stores one or more subprograms. The program includes subprograms such as constantly executed PG 171, normality time executed PG 172, anomaly time executed PG 173, and recovery time executed P 174.

The constantly executed PG 171 is a software and a subprogram including a procedure to acquire data from sensors.

The normality time executed PG 172 is a software, and a subprogram including a procedure to transmit data acquired by the constantly executed PG 171 through the external network 2. The normality time executed program 172 may include a procedure to transmit an actuator operation command received through the external network 2 to an actuator which is a control target.

The anomaly time executed PG 173 is a software, and a subprogram including a procedure to store the data acquired by the constantly executed PG 171 in the collected data temporal storage part 18. The anomaly time executed program may include a procedure to transmit all or part of an actuator operation command to an actuator which is a control target, according to a certain rule.

The recovery time executed PG 174 is a software, and a subprogram including a procedure to transmit the data stored in the collected data temporal storage part 18 through the external network 2.

The communicator 19 is a communication function which is connected to the external network 2 to perform data communication with an external device such as cloud 3, and is, for example, communication interface connectable to the internet. The communicator 19 may be any one or more communication interfaces via wired and wireless communication methods. Furthermore, the communicator 19 may be structured with one or more physical communication interfaces.

For example, if the communicator 19 incudes one physical communication interface, the anomaly detector 11, recovery detector 12, and network connection/disconnection part 14 may be each logically and independently connected to the external network 2. On the other hand, if the communicator 19 includes multiple physical communication interfaces, the anomaly detector 11, recovery detector 12, network connection/disconnection part 14 may each independently use a physical communication interface to be connected to the external network 2. Furthermore, the anomaly detector 11 and the recovery detector 12 may have a function to communicate with the cloud 3 through the communication network other than the external network 2 without using the communicator 19.

The processor part 100 executes various data processing, controlling and the like. The processor part 100 may be functions of, for example, a CPU, a FPGA, micro-processor, IC chip and the like.

Hereinafter, as an application example of the present arrangement, a structure to transmit the sensor data to the external network 2 while operating an actuator indicative if an example of the control target upon receipt of a command from the external network 2 will be disclosed. Note that the structure of the following program is an example, and since the structure of the program changes per application purpose, and thus, no limitation is intended thereby.

FIG. 3 is a functional structure example of the constantly executed program of the information processing equipment of the first arrangement.

The constantly executed PG 171 includes a procedure by which the functions of a sensor data acquisition part 1711 and an actuator operation part 1712 are executed by CPU, and the like. The sensor data acquisition part 1711 includes a function to acquire data from sensors, and if the normality time executed PG operates in the subprogram execution part 16, to transmit data to a data network transmission part 1721 of the normality time executed PG 172, and if the anomaly time executed PG 173 operates in the subprogram execution part 16, to transmit data to a data temporal storage control part 1731 of the anomaly time executed PG 173.

Furthermore, the actuator operation part 1712 includes a function to operate the actuator by receiving a command of actuator operation from a data network receiver 1722 of the normality time executed PG 172 if the normality time executed PG 172 operates in the subprogram execution part 16, and from a degeneracy controller 1732 of the anomaly time executed PG 173 if the anomaly time executed PG 173 operates in the subprogram execution part 16.

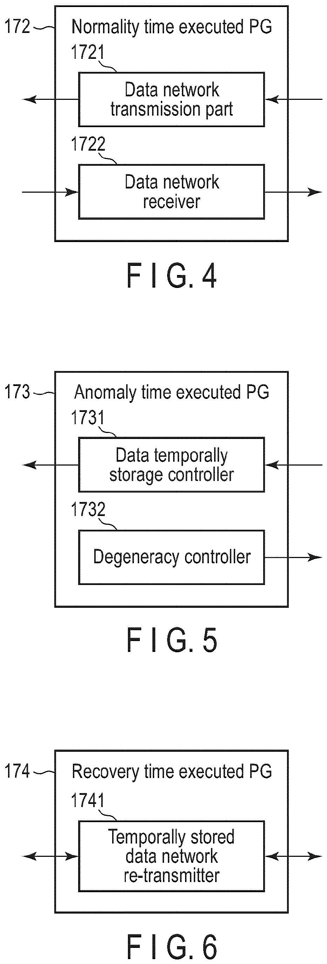

FIG. 4 illustrates a functional structure example of the normality time executed program of the information processing equipment of the first arrangement.

The normality time executed PG 172 include a procedure by which functions of the data network transmission part 1721 and the data network receiver 1722 are executed by CPU, and the like. The data network transmission part 1721 includes a function to transmit data received from the sensor data acquisition part 1711 through the external network 2. The data network receiver 1722 includes a function to transmit a command of actuator operation received from the external network 2 to the actuator operation part 1712.

FIG. 5 illustrates a functional structure example of the anomaly time executed program of the information processing equipment of the first arrangement.

The anomaly time executed PG 173 includes a procedure by which functions of the data temporal storage control part 1731 and the degeneracy controller 1732 are executed by CPU, and the like. The data temporal storage control part 1731 includes a function to store data received from the sensor data acquisition part 1711 to the collected data temporal storage part 18. The degeneracy controller 1732 includes a function to send an operation instruct with respect to the actuator operation part 1712 according to a certain rule without an actuator operation command from an external device such as cloud 3 via the external network 2. The rule may be determined and set in the degeneracy controller 1732 in advance. For example, a complicated operation such as power optimization control will be omitted, but a rule to continue a simple operation satisfying a certain operation reference which may not be so power effective, or a function to safely stop the actuator, may be set according to purposes. Furthermore, the rules set in the degeneracy controller 1732 may be dynamically set with respect to the information processing equipment 1 by the cloud 3 based on an occasion. Furthermore, a rule may be set in the degeneracy controller 1732 based on a degree of anomaly, and the degeneracy controller 1732 may determine the rule according to a degree of anomaly detected.

FIG. 6 illustrates a functional structure example of the recovery time executed program of the information processing equipment of the first arrangement.

The recovery time executed PG 173 includes a procedure by which the function of a temporal storage data network retransmission part 1741 is executed by CPU, and the like. The temporal storage data network retransmission part 1741 has a function to acquire data stored in the collected data temporal storage part 18, and to transmit the data through the external network 2.

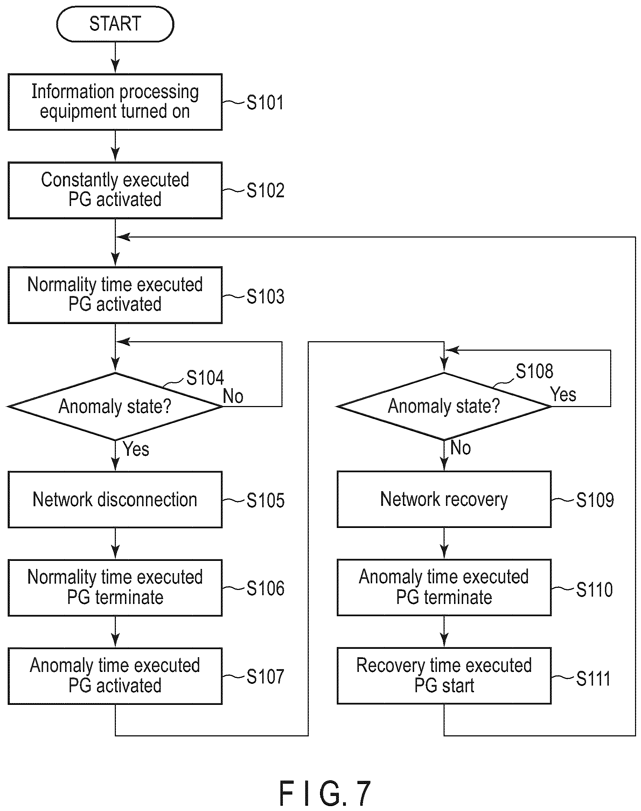

FIG. 7 is a flowchart of a process operation of the information processing equipment of the first arrangement.

When the information processing equipment 1 is turned on (step S101), the subprogram execution part 16 activates the constantly executed PG 171 (step S102), and then, activates the normality time executed PG 172 (step S103). Then, the anomaly detector 11 determined whether or not the mode of the edge is in an anomaly state referring to the anomaly detection rule DB 13, and if it is not an anomaly state, returns to determination of anomaly state (No in step S104). On the other hand, if it is an anomaly state, the network connection/disconnection part 14 disconnects the external network 2 (step S105). Next, the subprogram execution part 16 terminates the normality time executed PG 172 (step S106), and activates the anomaly time executed PG 173 (step S107).

Furthermore, the anomaly detector 11 determines whether or not it is an anomaly state, and if it is still the anomaly state (Yes in step S108), returns to the determination of anomaly state. On the other hand, if it is no longer the anomaly state, the network connection/disconnection part 14 recovers the network (step S109), the subprogram execution part 16 terminates the anomaly time executed PG 173 (step S110), and at the same time, starts the recovery time executed PG (step 5111). In step S111, the subprogram execution part 16 activates the normality time executed PG 172 through the procedure of the recovery time executed PG 174. When the normality time executed PG 172 is activated, the process returns to step S103, and the process from step S104 and thereafter will be repeated. When the normality time executed PG 172 is activated, the recovery time executed PG terminates.

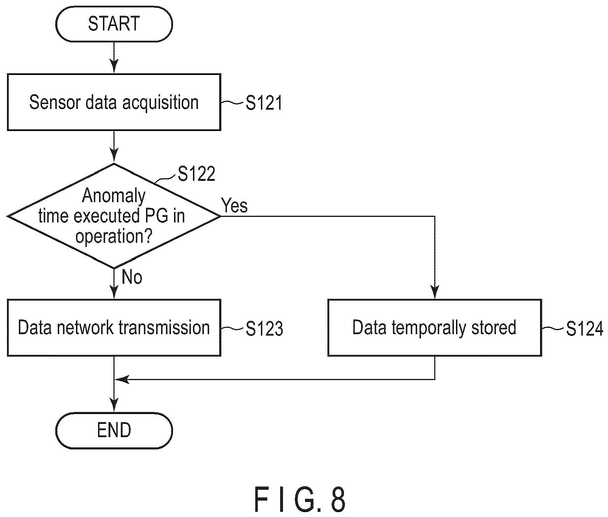

FIG. 8 illustrates a flowchart of a process operation when the information processing equipment of the first arrangement acquires sensor data.

Upon acquisition of sensor data (step S121), the subprogram execution part 16 determines whether or not the anomaly time executed PG is in operation, and if it is not (No in step S122), sends the acquired sensor data to an original transmission address (for example, cloud 3) through the external network 2 (step S123). If it is in operation (Yes in step S122), the acquired sensor data are temporarily stored in the information processing equipment 1 (step S124).

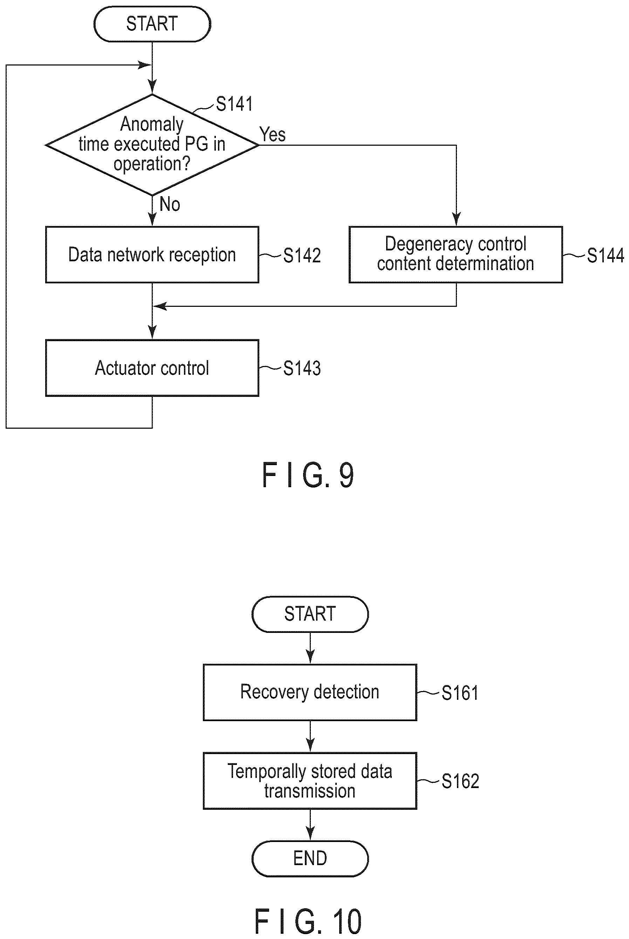

FIG. 9 is a flowchart of a process operation when the information processing equipment of the first arrangement operates the actuator.

The subprogram execution part 16 determines whether or not the anomaly time executed PG 173 is in operation (step S141). If it is not (No in step S141), the subprogram execution part 16 receives control data from the cloud 3 through the original external network 2 (step S142), and outputs a control command to perform the actuator control according to the received control content (step S143). On the other hand, if the anomaly time executed PG 173 is in operation (Yes in step S141), the subprogram execution part 16 determines the execution content of the anomaly time executed PG 173 (step S144), the control command to perform the actuator control according to the determined control content (step S143). In step S144, the execution content of the anomaly time executed PG 173 determined by the subprogram execution part 16 is, for example, control content by the constantly executed PG 171 and the normality time executed PG 172 which are degenerated (degeneracy control content), and the degeneracy control content may be predetermined as being set in the program.

FIG. 10 is a flowchart of a process operation when the information processing equipment of the first arrangement recovers the network operation.

When the recovery detector 12 detects recovery from an anomaly state, the subprogram execution part 16 acquires temporally stored data stored in the collected data temporal storage part 18, and transmits the data to the cloud 3 and the like through the external network 2 (step S162).

Through the aforementioned steps, even if the external network 2 or a device connected to the external network 2 such as cloud 3 system is in an anomaly state, that is, even if the mode of the edge 19 is in an anomaly state, a resilience function which can continue a minimally required process in the edge 10 can be achieved. For example, when the present arrangement is applied to a power plant, even if the cloud 3 is stopped, power generation can be continued.

Furthermore, in the present arrangement, a function to collect sensor data without a pause and to collect sensor data from the external network 2 side when the network state is recovered, and a function to continue a minimally required control operation (for example, an actuator operation) without an instruction from the external network 2 can be achieved, and total shutdown of the service of the edge 10 can be avoided. According to the present arrangement, a lesilient infrastructure system can be achieved, and a minimally required process can be continuously performed in the edge 10 even in occasions such as attacks to CPS system, anomaly in the network cloud 3, and disaster.

### (Second arrangement)

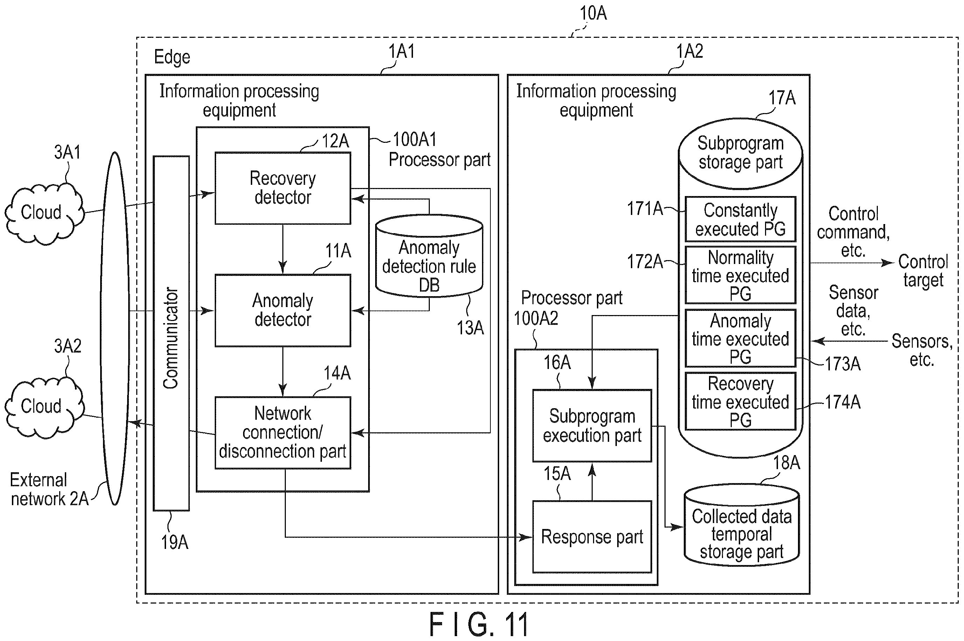

FIG. 11 is a structural diagram of an entire system of a second arrangement.

When terms of elements of the present arrangement are the same as those of the information processing equipment 1 of FIG. 1, detailed descriptions thereof will be omitted, and "A" will be added to the reference numbers of the elements of the information processing equipment 1 of the present application.

In the structure of the first arrangement, all functions are disposed in one information processing equipment 1, however, in the present arrangement, as in FIG. 11, an anomaly detector 11A, recovery detector 12A, anomaly detection rule DB 13A, and network connection/disconnection part 14 are structured as one information processing equipment 1A1 (or first information processing equipment 1A1), and a response part 15A, subprogram execution part 16A, subprogram storage part 17A, and collected data temporal storage part 18A are structured as the other information processing equipment 1A2 (or second information processing equipment 1A2).

For example, in the present arrangement, the first information processing equipment 1A1 includes function common with control targets in an edge 10A while the second information processing equipment 1A2 includes programs corresponding to control targets connected thereto, and thus, even if different control targets are in the edge 10, the functions of the information processing equipment 1 (functions described in the first arrangement) can be resiliently provided with the edge 10. Furthermore, the first information processing equipment 1A1 may exchange data with multiple clouds 3A1 and 3A2.

Furthermore, if there are various functions in the system (edge 10A), three or more second information processing equipment 1A2 may be provided, and programs stored in the subprogram storage part 17A of the second information processing equipment 1A2 may be changed. Furthermore, if there are, for example, two second information processing equipment 1A2, constantly executed PG 171A alone may be set in one, and normality time executed PG 172A, anomaly time executed PG 173A, and recovery time executed PG 174A may be set in the other, and that is, functions may be divided flexibly based on purposes and restrictions of the devices.

According to the present arrangement, with multiple information processing equipment 1A in the edge 10A, more resilient functions can be utilized.

### (Variation 1)

The aforementioned arrangements can be used for controlling, for example, a wind turbine power generator. In the present variation, an example where multiple wind turbine power generators are placed and operated at the same time in an edge 10B will be explained. For example, such multiple wind turbine power generators may have different manufacture date, modification thereto, and different characteristics because of different manufacturers, and thus, programs and parameters suitable for each wind turbine power generator may be necessary.

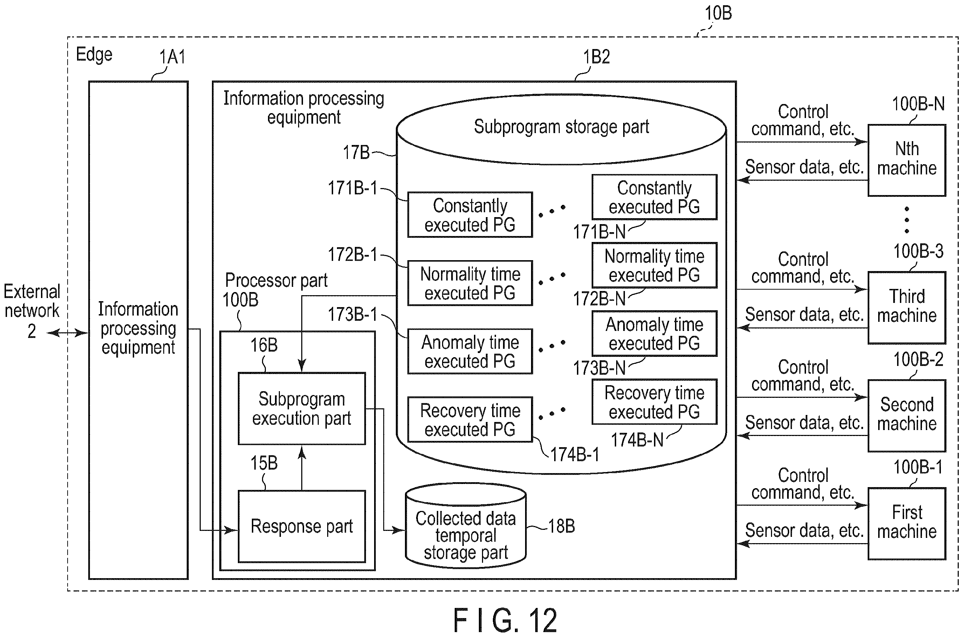

FIG. 12 is a structural diagram of an edge of the variation 1, and mainly illustrates an example where the structure of the second information processing equipment 1A2 of FIG. 11 is changed. In FIG. 12, elements which are similar to the elements of FIG. 11 are referred to by the same terms with "B" added to the reference numbers thereof, and unless otherwise specified, the functions thereof are the same.

Inside a second information processing equipment 1B2, a sub PG storage part 17B is prepared, in which execution programs corresponding to each of wind turbine power generators 100B-1, 100B-2, 100B-3, and 100B-N of first to Nth (N is a natural integer which is two or more) machines. For example, a constantly executed PG 171B-N, normality time executed PG 172B-N, anomaly time executed PG 173B-N, and recovery time executed PG 174B-N are prepared for the Nth wind turbine power generator machine.

The subprogram execution part 16B controls each wind turbine power generator and exchanges data with each wind turbine power generator based on the execution programs prepared for each. Thus, in a case of maintenance, workers perform the maintenance of one information processing equipment 1B2, and thus, can reduce movement of the workers. Furthermore, the information processing equipment 1B2 may perform transmission of control commands and the like with respect to each wind turbine power generator and collection of sensor data from each wind turbine power generator through a wireless communication method for convenience.

### (Variation 2)

In the present variation, an example where a second information processing equipment is provided with respect to each of wind turbine power generators.

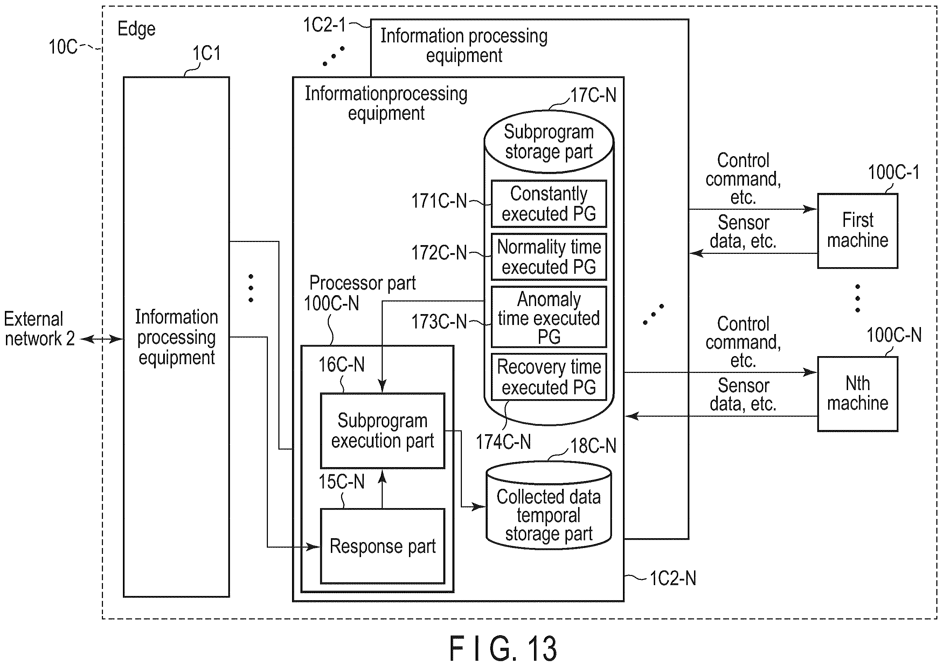

FIG. 13 is a structural diagram of an edge of the variation 2. Elements which are similar to the elements of FIG. 11 are referred to by the same terms with "C" added to the reference numbers thereof, and unless otherwise specified, the functions thereof are the same.

Second information processing equipment 1C2-1 and 1C2-N are prepared and connected to first and Nth wind turbine power generators machines (N is a natural integer which is two or more). The structure within the second information processing equipment 1C2-1 and 1C2-N are the same, and unless otherwise specified, will be referred to as the second information processing equipment 1C2. The following example will be described using the second information processing equipment 1C2-N while the same applies to the second information processing equipment 1C2-1.

The second information processing equipment 1C2-N stores a constantly executed PG 171B-N, normality time executed PG 172B-N, anomaly time executed PG 173B-N, recovery time executed PG 174B-N prepared for the Nth wind turbine power generator machine in a subprogram storage part 17C-N, which are executed by a subprogram execution part 16C-N.

Furthermore, in an edge 10C, for setting a first information processing equipment connected to an external network 2 as one information processing equipment 1C1, the first information processing equipment 1C1 performs communication with multiple second information processing equipment 1C2-1 and 1C2-N.

The present variation is effective when programs suitable with respect to each of multiple wind turbine power generators are desired, and second information processing equipment (corresponding to information processing equipment 1C2-1 and 1C2-N) corresponding the multiple wind turbine power generators (for example, first and Nth machine) are integrated. Furthermore, multiple wind turbine power generators may have different manufacture date, modification thereto, and different characteristics because of different manufacturers, and thus, programs suitable for each wind turbine power generator are possible because of the present variation. Furthermore, with the present variation, even if one wind turbine power generator is stopped, maintenance thereof can be performed while other power generators are in operation.

Furthermore, with the present variation, the second information processing equipment 1C2-1 and 1C2-N can be provided with a mount position of respective wind turbine power generators, and if data exchange between the first information processing equipment 1C1-1 and the second information processing equipment (corresponding to the information processing equipment 1C2-1 and 1C2-N) is performed through a wireless communication method, the system can be easily structured.

With the aforementioned arrangements and variations, an information processing equipment, information processing method, and information processing program can be provided. With the aforementioned arrangements and variations, even if attack surfaces increase in future as the CPS advances, an influence by the attack to the edge can minimized, and thus, necessary service of the infrastructure can be continuously presented.

Processes shown in the flowchart, sequential chart, and the like may be realized by hardware such as CPU, IC chip, digital signal processor (DSP), and the like, or software (program and the like) operated in a computer including a microcomputer, or a combination of hardware and software.

Furthermore, claims written as a processing logic, as a program including instructions executing in a computer, CPU, and the like, or as a computer-readable recording medium with the instruction are encompassed within the scope of the invention. Furthermore, name and terms used herein are not limited thereto, and as long as substantially same contents and concepts are included, different expressions are allowed.

While certain arrangements have been described, these arrangements have been presented by way of example only, and are not intended to limit the scope of the claims. Indeed, the novel equipment described herein may be embodied in a variety of other forms; furthermore, various omissions, substitutions and changes in the form of the equipment described herein may be made.

The arrangements as described above include clauses below.

### Clause 1

An information processing equipment provided with an edge, characterized by comprising:
a subprogram storage memory (17):
   an anomaly detector (11):
a network connection/disconnection part (14):
   a response part (15):
a subprogram execution part (16):
   characterized in that:
   the subprogram storage memory (17) stores a subprogram to execute one or more certain functions;
   an anomaly detector (11) detects anomaly according to a certain rule and switches modes indicative of anomaly/normality states of the edge to anomaly state upon detection of anomaly;
   a network connection/disconnection part (14) performs a certain process when the anomaly detector detects anomaly;
   a response part (15) instructs execution of one or more procedures of the subprogram based on the state of the mode; and
   a subprogram execution part (16) executes one or more procedures of the subprogram.

### Clause 2

The information processing equipment of clause 1, characterized by comprising:
a recovery detector (12):
characterized in that:
the recovery detector (12) detects recovery indicative of a change of the mode from the anomaly state to the normality state according to a certain rule;
a network connection/disconnection part (14) performs a certain process when the recovery detector detects recovery.

### Clause 3

The information processing equipment of clause 2, characterized by further comprising:
a collected data temporal storage memory(18):
characterized in that:
the collected data temporal storage memory(18) temporally stores data collected while the mode is in the anomaly state.

### Clause 4

The information processing equipment of clause 3, characterized in that:
the network connection/disconnection part performs a network disconnection process upon detection of anomaly while the mode is in the normality state, and performs a network connect process upon detection of the recovery.

### Clause 5

The information processing equipment of clause 2, characterized in that:
the network connection/disconnection part activates an operation to pass a certain packet alone upon detection of anomaly while the mode is in the normality state, and deactivates the operation to pass a certain packet alone upon detection of the recovery.

### Clause 6

The information processing equipment of clause 1, characterized in that:
the subprogram execution part (16) executes one or more procedures of a constantly executed program to obtain data from a sensor, one or more procedures of a normality time executed program to transmit the data via a network, one or more procedures of an anomaly time executed program to store the data in the collected data temporal storage part, one or more procedures of a recovery time executed program to transmit data stored in the collected data temporal storage part via the network; and
the subprogram includes one or more procedures of the constantly executed program, the normality time executed program, the anomaly time executed program, and the recovery time executed program.

### Clause 7

The information processing equipment of clause 6, characterized in that:
the subprogram execution part (16) executes constantly one or more procedures of the constantly executed program, and executes, based on the mode, one or more procedures of the normality time executed program, the anomaly time executed program, and the recovery time executed program.

### Clause 8

The information processing equipment of clause 7, characterized in that:
the subprogram execution part (16) transmits an actuator operation command received via the network to an actuator by one or more procedures of the normality time executed program, transmits all or part of the actuator operation command according to a certain rule to the actuator by one or more procedures of the anomaly time executed program, and
the response part (15) switches one or more procedures to be executed based on the mode between one or more procedures of the normality time executed program and one or more procedures of the anomaly time executed program.

### Clause 9

An information processing method in an edge, characterized by comprising:
setting a mode indicative of states of anomaly/normality of the edge to an anomaly state upon detection of anomaly according to a certain rule;
performing a process of disconnecting network connection in connection upon detection of the anomaly; and
executing all or part of one or more procedures of subprograms to execute a certain function based on the state of the mode.

### Clause 10

A computer-readable recording medium characterized by comprising:
instructions that causes a computer to execute one or more procedures, characterized by comprising:
setting a mode indicative of states of anomaly/normality of an edge to an anomaly state upon detection of anomaly according to a certain rule;
performing a process of disconnecting network connection in connection upon detection the anomaly; and
executing all or part of one or more procedures of subprograms to execute a certain function based on the state of the mode.

## Claims

1. An information processing equipment provided with an edge, **characterized by** comprising:
a subprogram storage memory (17):
an anomaly detector (11):
a network connection/disconnection part (14):
a response part (15):
a subprogram execution part (16):
**characterized in that**:
the subprogram storage memory (17) stores a subprogram to execute one or more certain functions;
an anomaly detector (11) detects anomaly according to a certain rule and switches modes indicative of anomaly/normality states of the edge to anomaly state upon detection of anomaly;
a network connection/disconnection part (14) performs a certain process when the anomaly detector detects anomaly;
a response part (15) instructs execution of one or more procedures of the subprogram based on the state of the mode; and
a subprogram execution part (16) executes one or more procedures of the subprogram.

2. The information processing equipment of claim 1, **characterized by** comprising:
a recovery detector (12):
**characterized in that**:
the recovery detector (12) detects recovery indicative of a change of the mode from the anomaly state to the normality state according to a certain rule;
a network connection/disconnection part (14) performs a certain process when the recovery detector detects recovery.

3. The information processing equipment of claim 2, **characterized by** further comprising:
a collected data temporal storage memory(18):
**characterized in that**:
the collected data temporal storage memory(18) temporally stores data collected while the mode is in the anomaly state.

4. The information processing equipment of claim 3, **characterized in that**:
the network connection/disconnection part performs a network disconnection process upon detection of anomaly while the mode is in the normality state, and performs a network connect process upon detection of the recovery.

5. The information processing equipment of claim 2, **characterized in that**:
the network connection/disconnection part activates an operation to pass a certain packet alone upon detection of anomaly while the mode is in the normality state, and deactivates the operation to pass a certain packet alone upon detection of the recovery.

6. The information processing equipment of claim 1, **characterized in that**:
the subprogram execution part (16) executes one or more procedures of a constantly executed program to obtain data from a sensor, one or more procedures of a normality time executed program to transmit the data via a network, one or more procedures of an anomaly time executed program to store the data in the collected data temporal storage part, one or more procedures of a recovery time executed program to transmit data stored in the collected data temporal storage part via the network; and
the subprogram includes one or more procedures of the constantly executed program, the normality time executed program, the anomaly time executed program, and the recovery time executed program.

7. The information processing equipment of claim 6, **characterized in that**:
the subprogram execution part (16) executes constantly one or more procedures of the constantly executed program, and executes, based on the mode, one or more procedures of the normality time executed program, the anomaly time executed program, and the recovery time executed program.

8. The information processing equipment of claim 7, **characterized in that**:
the subprogram execution part (16) transmits an actuator operation command received via the network to an actuator by one or more procedures of the normality time executed program, transmits all or part of the actuator operation command according to a certain rule to the actuator by one or more procedures of the anomaly time executed program, and
the response part (15) switches one or more procedures to be executed based on the mode between one or more procedures of the normality time executed program and one or more procedures of the anomaly time executed program.

9. An information processing method in an edge, **characterized by** comprising:
setting a mode indicative of states of anomaly/normality of the edge to an anomaly state upon detection of anomaly according to a certain rule;
performing a process of disconnecting network connection in connection upon detection of the anomaly; and
executing all or part of one or more procedures of subprograms to execute a certain function based on the state of the mode.

10. A computer-readable recording medium **characterized by** comprising:
instructions that causes a computer to execute one or more procedures, **characterized by** comprising:
setting a mode indicative of states of anomaly/normality of an edge to an anomaly state upon detection of anomaly according to a certain rule;
performing a process of disconnecting network connection in connection upon detection the anomaly; and
executing all or part of one or more procedures of subprograms to execute a certain function based on the state of the mode.
